# EUROPEAN PATENT APPLICATION

(11) **EP 1 674 323 A1**
(43) Date of publication of application: **28.06.2006**
(21) Application number: 04787669.3
(22) Date of filing: 07.09.2004
(51) Int. Cl.: B60K 35/00

(54) **DISPLAY DEVICE FOR VEHICLE**

(30) Priority: 26.09.2003 JP 2003334569
(71) Applicant: NIPPON SEIKI CO., LTD., Nagaoka-shi, Niigata 940-8580 (JP)
(72) Inventor: UCHIYAMA, Tadahiro, c/o Nippon Seiki Co. Ltd., Nagaoka-shi, Niigata 9408580 (JP)
(74) Representative: Jackson, Richard Eric
(86) International application number: PCT/JP2004/012965
(87) International publication number: WO 2005/030521

(57) **Abstract**

A reflecting mirror (5) is rotatably supported and reflects display light (L). A stepping motor (8) rotates the reflecting mirror (5). Storage means (22) can store position data in accordance with the rotation position of the reflecting mirror (5) for each user. Control means (21) receives an identification code from a keyless entry device for specifying the user, reads out position data corresponding to the identification code from the storage means (22), and operates the stepping motor (8) according to the position data which has been read out.

## Description

### Technical Field

The present invention relates to a display unit for vehicles, and particularly, the present invention relates to a display unit for vehicles, which reflects a display light emitted from a display instrument on a reflection member and in which a virtual image projected on the reflection member is viewed.

### Technical Field

Conventionally, various head-up display units for displaying the virtual image reflecting the display light emitted from the display instrument have been suggested as a display unit for vehicles. For example, Patent document 1 discloses these display units. The head-up display unit reflects the display light to be emitted from the display unit arranged on a dashboard of a vehicle on a windshield of the vehicle toward a direction of a user and displays the virtual image.

### Patent Document 1: JP-A-11-310055

Such a head-up display unit is provided with a display unit having the emission type display instrument and this display unit has a display instrument such as a fluorescence display tube and a reflection mirror for reflecting the display light emitted from this display instrument. A motor for rotating this reflection mirror is housed in a housing, a gear is attached to a rotational axis of the motor, and this gear is engaged with a gear member that is fixed to a holding member for holding the reflection mirror.

The user of the vehicle sets an angle position of the reflection mirror in a movable range between a higher limit position and a lower limit position (for example, 60°) by operating a push button switch and this makes it possible to adjust a direction of projecting the display light on the windshield. For example, when the angle position of the reflection mirror is set in the vicinity of the lower limit position, the reflection mirror can be adjusted to the user with a higher viewing point and when the angle position of the reflection mirror is set in the vicinity of the higher limit position, the reflection mirror can be adjusted to the user with a lower viewing point.

### Disclosure of the Invention

### Problems that the Invention is to Solve

A customized function to automatically adjust the positions of a sheet, a room mirror, and a side mirror or the like in a vehicle for each user of the vehicle attracts attention. Also in the above-described head-up display unit, a display unit for vehicles that can automatically adjust the view point position for the virtual image for each user and can improve a convenience is desired.

The present invention has been made taking the foregoing problems into consideration and an object of which is to provide a display unit for vehicles that can automatically adjust an angle position of a reflection member for reflecting a display light emitted from a display instrument to a view point position for each user of a vehicle so as to be capable of improving a convenience.

### Means for Solving the Problems

In order to solve the above-described problem, as a display unit for vehicles set forth in Claim 1, the present invention provides a display unit for vehicles for displaying a virtual image reflecting a display light emitted from the display instrument, comprising: a reflection member that is held in a rotatable state and reflects the display light; driving means that rotatably operates the reflection means; storage means that can store the positional data depending on the rotation position of the reflecting means for each user; and control means that inputs the identification information from user identifying means for identifying a user and reads the positional data corresponding to the identification information from the storage means, and operates the driving means on the basis of this read positional data.

In addition, in a display unit for vehicles set forth in Claim 2 according to the display unit for vehicles set forth in Claim 1, the control means performs the first processing operation for operating the driving means so as to return the reflection member to the original position on the basis of the vehicle information that an ignition switch is turned off and performs the second processing operation for rotating the reflection member to a position set by the identified user after the completion of the first processing operation.

In addition, in a display unit for vehicles set forth in Claim 3 according to the display unit for vehicles set forth in Claim 2, the control means performs the first processing operation for operating the driving means so as to return the reflection member to the original position on the basis of the vehicle information that an ignition switch is off and performs the second processing operation for rotating the reflection member to a position set by the identified user after the completion of the first processing operation.

In addition, in a display unit for vehicles set forth in Claim 4 according to the display unit for vehicles set forth in Claim 1, inputting the identification information from the user identifying means, the control means operates the driving means so as to rotate the reflecting member from the present position to a new position upon input of the identification information in the case that the identification information inputted in this time is different from the previously inputted identification information, and respective positional data corresponding to the respective identification information are different.

### Advantage of the Invention

The present invention relates to a display unit for vehicles, which reflects a display light emitted from a display instrument on a reflection member and displays a virtual image. According to the invention, it is possible to automatically adjust an angle position of a reflection member for reflecting the display light emitted from the display instrument to a view point position for each user of a vehicle so as to improve a convenience.

### Brief Description of the Drawings

Fig. 1 is a schematic drawing showing a display unit for vehicles according to an embodiment of the present invention.
Fig. 2 is a substantial part sectional view showing a display unit of the embodiment.
Fig. 3 is a block diagram showing an electric structure of the display unit of the embodiment.
Fig. 4 is a view showing a control method of the control means of the embodiment.
Fig. 5 is a view showing the rotation of a reflection member of the control method of the embodiment.

### Best Mode for Carrying Out the Invention

Hereinafter, an embodiment of the present invention will be described based on the attached drawings.

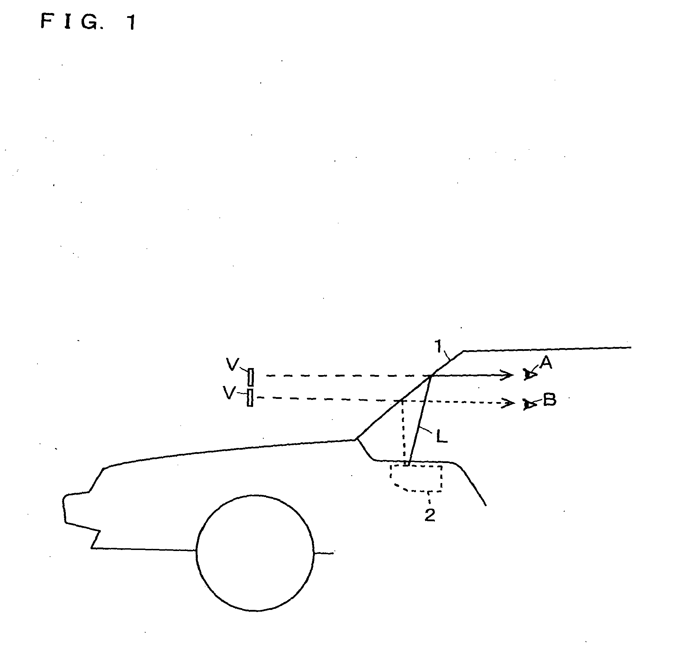

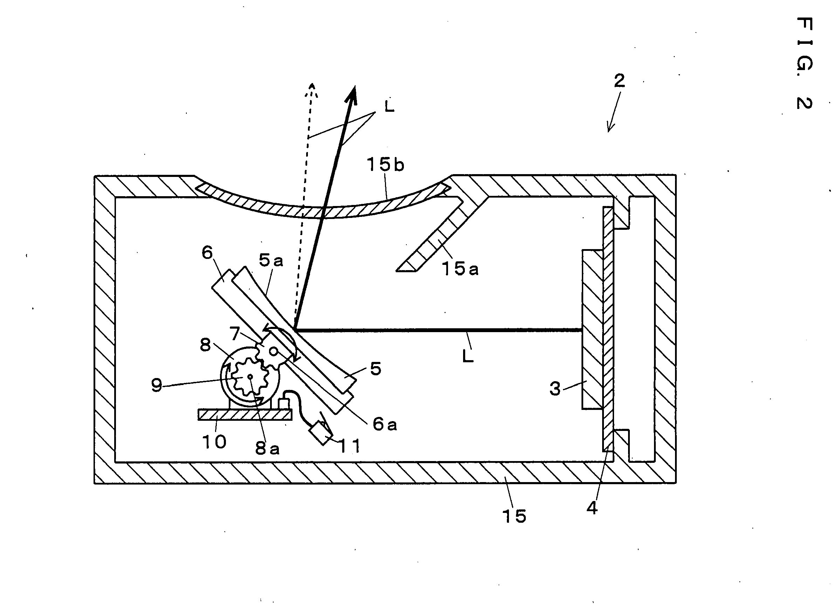

With reference to Fig. 1 and Fig. 2, the entire structure of a head-up display unit as a display unit for vehicles will be described. The head-up display unit displays a virtual image V by projecting a display light L on a windshield 1 of the vehicle from a display unit 2. The display unit 2 is arranged on a dashboard of the vehicle. The display light L to be projected from the display unit 2 is reflected in the directions of users A and B by the windshield 1 and the user A and B of the vehicle can view the virtual image V to be superimposed on scenery.

A reference numeral 3 denotes a liquid crystal display instrument (a display instrument) and this display instrument 3 comprises a liquid crystal display element and back light means. A reference numeral 4 denotes a circuit board and on this circuit board 4, the display instrument 3 and control means to be described later or the like are mounted. A reference numeral 5 denotes a reflection mirror (a reflection member) and this reflection mirror 5 reflects the display light L emitted from the display instrument 3 on the windshield 1. In the reflection mirror 5, a reflection surface 5a is formed by depositing metal such as aluminum on a resin such as polycarbonate. The reflection surface 5a is formed in the shape of a concave face and it can enlarge and project the display light L from the display instrument 3 on the windshield 1.

A reference numeral 6 denotes a holding member and the reflection mirror 5 is fixed on the holding member 6 with a two-sided adhesion tape and an adhesive agent or the like. On the holding member 6, a pair of shaft parts 6a is integrally formed and these shaft parts 6a are supported by a bearing provided on a housing to be described later. The reflection mirror 5 and the holding member 6 are supported swingably and they can move with an angle centering on the shaft parts 6a. Further, on the shaft parts 6a, a gear member 7 that is engaged with a gear of a stepping motor to be described later is firmly fixed.

A reference numeral 8 denotes a stepping motor (driving means) and on this stepping motor 8, a gear 9 is mounted on a rotational shaft 8a of the stepping motor 8. The gear 9 is engaged with a gear member 7 to be firmly fixed to the shaft parts 6a of the holding member 6 so as to transmit the rotation of the rotational shaft 8a of the stepping motor 8 to the gear 9 and the gear member 7. As a result, the reflection mirror 5 moves with an angle together with the holding member 6.

A reference numeral 10 denotes an auxiliary board and to this auxiliary board 10, the stepping motor 8 is mounted. Further, to the auxiliary board 10 original position detecting means (position detecting means) 11 made by a limit switch for determining an original position in the rotational operations of the holding member 6 and the reflection mirror 5 is electrically connected. In addition, the auxiliary board 10 is electrically connected to the circuit board 4 through a connection member such as an electric code and an FPC or the like (not illustrated).

A reference numeral 15 denotes a housing and in this housing 15, the above-described respective members are housed. On the housing 15, a light shielding wall 15a is integrally formed so as to prevent a phenomenon (washout) that the outside light such as sunlight enters the liquid crystal display instrument 3 and the virtual image is not viewable. On the housing 15, a translucency cover 15b through which the display light L transmits is arranged. The translucency cover 15b is configured by a translucency resin such as acrylic and is formed in a curved shape.

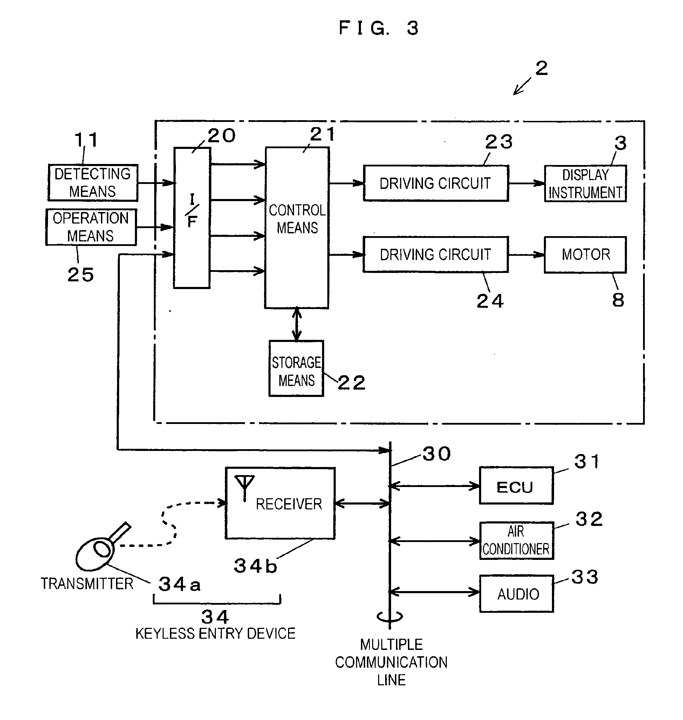

Next, with reference to Fig. 3, the electric structure of the display unit 2 of the head-up display unit will be described.

The display unit 2 is mainly configured by an interface circuit 20, control means 21, storage means 22, the liquid crystal display instrument 3, the stepping motor 8, and respective driving circuits 23 and 24 for driving the liquid crystal display instrument 3 and the stepping motor 8, respectively.

To the interface circuit 20, the original position detecting means 11 configured by a limit switch for determining the original position in the rotational operation of the reflection mirror 5, operation means 25 configured by an operation switch group for moving the virtual image V on the upper and lower directions by rotatably operating the reflection mirror 5, and a multiple communication line 30 for obtaining various information of vehicles are connected. On the multiple communication line 30, for example, an ECU (engine control unit) 31, an air conditioner 32, an audio 33, and a keyless entry device (user identifying means) 34 are connected so that it is possible to input the vehicle running information such as the engine rotation number, a speed, and a residual fuel or the like of a vehicle (from the ECT 31); the audio information such as a volume, a name of music, and the reception conditions of AM and FM radios (from the audio 33); and the air conditioning information such as an outdoor air temperature and an indoor air temperature or the like (from the air conditioner 32) in the display unit 2.

The keyless entry device 34 is provided with a transmitter 34a and a receiver 34b and outputs an identification code of the user (the identification information) to the control means 21 to be described in detail later via the multiple communication line 30 and the interface circuit 20. Further, the keyless entry device 34 serves as the user identifying means for selecting the rotational position of the reflection mirror 5 for each user of the vehicle.

The control means 21 is configured by a micro computer and it has a CPU for executing a program; a RAM for temporarily storing a reading result from the storage means 22 and a calculation result or the like; and a ROM having a program determining the display manner and the display content of the liquid crystal display instrument 3 and a program for operating the stepping motor 8, stored therein or the like.

The storage means 22 is configured by an EEPROM and a backup RAM or the like and it stores various data as being rewritable. In the storage means 22, the positional data (the angle data at the stepping motor) of the reflection mirror 5 is stored as corresponding to the identification code for identifying the user.

The liquid crystal display instrument 3 emits various information to be transmitted from the multiple communication line 30 as the display light L to display the virtual image V by projecting the display light L on the windshield 1 of the vehicle through the reflection mirror 5.

The stepping motor 8 rotatably operates the holding means 6 on the basis of an operation signal form the operation means 25 and the positional data stored in the storage means 22 so as to adjust the angle of the reflection mirror 5.

The driving circuit 23 is a dedicated circuit for driving the liquid crystal display instrument 3 and drives the liquid crystal display instrument 3 on the basis of an instruction signal from the control means 21.

The driving circuit 24 is a dedicated circuit for driving the stepping motor and rotatably drives the stepping motor 8 on the basis of a rotation instruction from the control means 21.

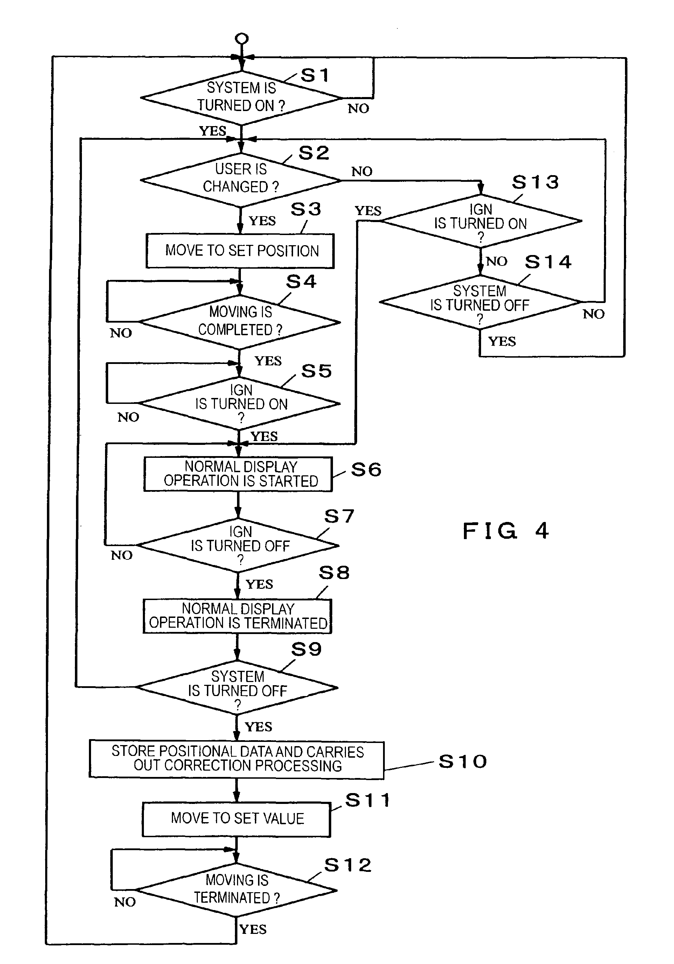

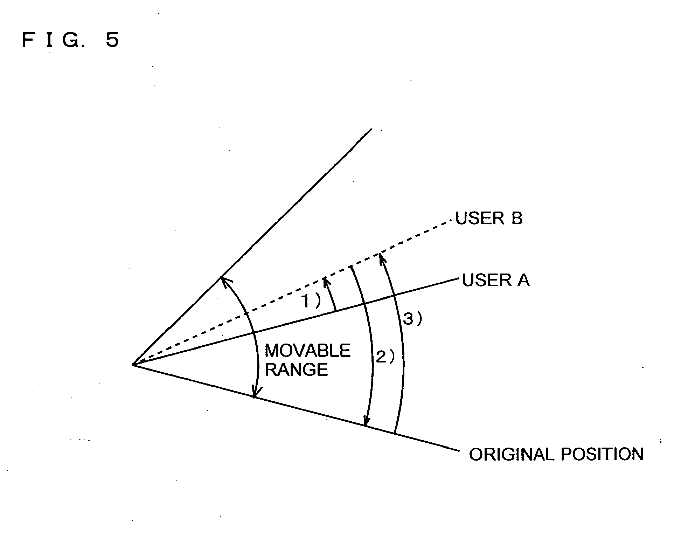

The display unit 2 is configured by the above-described respective parts. Next, with reference to Figs. 4 and 5, the control method of the control means 21 will be described.

The control means 21 determines if a system is turned ON or not (Step S1). Specifically, when the instruction signal indicating the state of the vehicle, namely, "a door is open" from the receiver 34b of the keyless entry device 34, the control means 21 makes the transition from a sleep mode into an active mode. Further, to the instruction signal from the keyless entry device 34, an identification code (the identification information) of the users (A, B) is added.

Determining that the system should be turned on, the control means 21 compares an identification code to be inputted this time with the previously inputted identification code that is stored in the storage means 22, and then, the control means 1 determines if the user is changed or not (Step S2).

For example, determining that the user A is changed to the user B, the control means 21 rotates the reflection mirror 5 from the position of the user A into the position of the user B by operating the stepping motor 8 in order to display the virtual image V on the view position on the basis of the positional data registered by the user B in advance and stored in the storage means 22 (step S3, 1 of Fig. 5). Specifically, the identification code can be changed in the case that the user A gets in the vehicle using a master key of the vehicle and in the case that the user B gets in the vehicle using a spare key, so that the control means 21 can determine it.

Next, detecting the completion of the moving operation of the stepping motor 8 and turning ON of the ignition switch (Steps S4 and S5), the control means 21 makes the liquid crystal display instrument 3 to perform the normal display operation displaying the vehicle information, the audio information, and the air conditioning information or the like on the liquid crystal display instrument 3 (Step S6). Further, turning ON of the ignition switch may be any of the shift from the OFF state of the ignition switch into the ON state of an accessory power source or the shift from the OFF state of the ignition switch into the ON state of the engine.

In a next step, the control means 21 determines if the ignition switch is turned off or not (step S7). Specifically, when the instruction signal indicating the vehicle state that the ignition switch is turned OFF (shifted from the ON state of the engine into the position where the accessory power source is turned ON) is inputted from the ECU 31, the control means 21 terminates the above-described normal display operation

### (Step S8).

Next, the control means 21 determines if the system is turned off or not (step S9). In this determination, the state of the system is turned ON, for example, when the ignition switch is located at the position where the accessory power source is turned ON and the multiple communication line is active so that the audio 33 is turned ON.

Determining that the system is turned OFF in the Step S9, the control means 21 stores the positional data at the present position of the user B in the storage means 22 (when the user B changes the positional data using the operation means 25, the changed positional data is stored in the storage means 22), and then, the control means 21 carries out the processing (the first processing operation) of returning the reflection mirror 5 (the stepping motor 8) into the original position where the position detecting means 11 is arranged (Step S10, 2 of Fig. 5). After that, the control means 21 operates the stepping motor 8 base on the positional data of the user B stored in the storage means 22 when the ignition switch is turned OFF so as to move the reflection means 5 to the view position set by the user B (the second processing operation) (Step S11, 3 of Fig. 5).

Further, in the processing operation in the above-described steps S9 and S10, the positional data based on the user (A, B) of the reflection mirror 5 may be deviated when the vehicle is running on a rough road or the strong oscillation is transmitted from the vehicle. However, even in such a case, since the processing to return the reflection mirror 5 into the original position every time the ignition switch is turned OFF and the correction processing to return the reflection mirror 5 into a position set by the user at that time again are carried out, it is possible to locate the reflection mirror 5 into a correct position that is set by the user.

Determining if the reflection mirror 5 has been moved or not (Step S12), the control means 21 returns to the Step S11 when it determines that the reflection mirror 5 has been moved, to detect that the system is turned ON or not.

The control means 21 proceeds to Step S13 when it determines that the user is not changed in the Step S2. In Step S13, the control means 21 determines if the ignition switch is turned ON or not. When the control means 21 determines that the ignition switch is turned ON, it proceeds to the Step S5 to start the normal display operation.

In addition, determining that the ignition switch is turned OFF, the control means 21 determines if the system is turned OFF or not in the next determination (Step S14). Determining that the system is turned OFF in the step S14, the control means 21 returns to the Step S1 and determines if the system is turned ON or not, and determining that the system is not turned OFF, the control means 21 returns to the Step S2. Further, in the step S2, the control means 21 identifies the user and also accepts the change of the positional data for each user. Specifically, the control means 21 can change the positional data using the operating means 25. In addition, the determination if the system is turned OFF or not in the Step S4 is identical with the step S9.

The above-described processing flow is characterized by inputting an identification code from the keyless entry device 34 for identifying the user and reading the positional data corresponding to the identification code from the storage means 22; operating the stepping motor 8 based on this read positional data; carrying out the reset processing operation after the ignition switch is turned OFF; and rotatably operating the reflection mirror 5 on the basis of the positional data set by the identified user regardless of whether the ignition switch is turned ON or OFF.

Such a display unit for vehicles relates to one for displaying the virtual image V by reflecting the display light L emitted from the liquid crystal display instrument 3, and this display unit for vehicles is provided with the reflection mirror 5 that is supported so as to be rotatable and reflects the display light L; the stepping motor 8 that is the driving means for rotatably operating the reflection mirror 5; the storage means 22 that can store the positional data corresponding to the rotational position of the reflection mirror 5 for each user; and the control means 21 that inputs an identification code from the keyless entry device 34 for identifying the user, reads the positional data corresponding to the identification code from the storage means 22, and operates the stepping motor 8 on the basis of this read positional data. According to this display unit for vehicle, it is possible to eliminate the bothersome aligning operation that the view position is adjusted every time the user uses the vehicle and to automatically adjust the view position of the user. Accordingly, a convenience as the display unit for vehicle can be improved.

In addition, the control means 21 carries out the processing to operate the stepping motor 8 so as to return the reflection mirror 5 into the original position on the basis of the vehicle information indicating that the ignition switch is turned OFF and carries out the correction processing to carry out the processing of rotating the reflection mirror 5 at a position set by the user who is identified through the keyless entry device 34 after the above processing has been terminated. The positional data based on the user (A, B) of the reflection mirror 5 may be deviated when the vehicle is running on a rough road or the strong oscillation is transmitted from the vehicle. However, even in such a case, since the above-mentioned correction processing is carried out every time the ignition switch is turned OFF, it is possible to prepare the reflection mirror 5 at a correct position on the basis of the user.

The above-mentioned correction processing is carried out when the ignition switch is turned OFF because, for example, if the correction processing is carried out when the ignition switch is turned ON, it takes a time for moving the reflection mirror 5 (moving the virtual image V) and the user feels sense of discomfort when the user of the vehicle is changed.

In addition, since the position detecting means 11 for determining the original position is provided, the original point of the reflection mirror 5 can be mechanically decided and this makes it possible to simplify the program processing.

In addition, inputting the identification code from the keyless entry device 34, the control means 21 operates the stepping motor 8 so as to rotate the stepping motor 5 from the present operational position to a new operational position upon input of the identification code in the case that the identification information inputted in this time is different from the previously inputted identification information, and respective operational positions corresponding to the respective identification codes are different. When the control means 21 determines that the user is different upon turning ON of the system, the reflection mirror 5 may be only moved from the present position to the new position. Since the rotational range of the reflection mirror 5 is made narrow, it is possible to adjust the view position to the correct view position for each user for a short time. Therefore, it is possible to prevent the user from feeling sense of discomfort that it takes a time till the user normally views the display operation.

Further, according to the embodiment of the present invention, the keyless entry device 34 is taken as an example as the user identifying means. However, it is obvious that, for example, a smart entry device not requiring the remote control operation, a device using the user identification code such as an immobilizer device or the like for theft proof, and further, a device for individual identification such as fingerprint matching or the like can be used as the user identifying means. In addition, one for identifying the user by predetermined input due to the operation switch may be available.

Further, the control means according to the embodiment of the present invention detects the ON and OFF states of the ignition switch via the multiple communication line 30. However, according to the present invention, the control means may be provided with a detection circuit for detecting the ON and OFF states of the ignition switch to detect the ON and OFF states of the ignition switch by this detection means.

### Industrial Applicability

The present invention is described by taking the display unit for vehicles, which reflects the display light L to the direction of the user on the windshield 1 of the vehicle and displays the virtual image V, as an example. However, the present invention can be also applied to the display unit for vehicles using a projection member different from the windshield 1 for reflecting the display light L to the direction of the user.

## Claims

1. A display unit for vehicles for displaying a virtual image reflecting a display light emitted from a display instrument, **characterized by** comprising: a reflection member that is held in a rotatable state and reflects the display light; driving means that rotatably operates the reflection means; storage means that can store the positional data depending on the rotation position of the reflecting means for each user; and control means that inputs the identification information from user identifying means for identifying a user and reads the positional data corresponding to the identification information from the storage means, and operates the driving means on the basis of this read positional data.

2. The display unit for vehicles according to Claim 1,
**characterized in that** the control means performs the first processing operation for operating the driving means so as to return the reflection member to the original position on the basis of the vehicle information that an ignition switch is turned off and performs the second processing operation for rotating the reflection member to a position set by the identified user after the completion of the first processing operation.

3. The display unit for vehicles according to Claim 2,
**characterized by** comprising position detecting means for determining the original position.

4. The display unit for vehicles according to Claim 1,
**characterized in that** inputting the identification information from the user identifying means, the control means operates the driving means so as to rotate the reflecting member from the present position to a new position upon input of the identification information in the case that the identification information inputted in this time is different from the previously inputted identification information, and respective positional data corresponding to the respective identification information are different.
